# EUROPÄISCHE PATENTSCHRIFT

(11) **EP 2 352 776 B1**
(45) Veröffentlichungstag und Bekanntmachung des Hinweises auf die Patenterteilung: **08.01.2014**
(21) Anmeldenummer: 09759917.9
(22) Anmeldetag: 09.11.2009
(51) Int. Cl.: C08G 18/71, C08G 65/336, C09D 201/10

(54) **VERFAHREN ZUM ABDICHTEN VON OBERFLÄCHEN**
METHOD FOR SEALING SURFACES
PROCÉDÉ POUR RENDRE DES SURFACES ÉTANCHES

(30) Priorität: 18.11.2008 DE 102008043825
(43) Veröffentlichungstag der Anmeldung: 10.08.2011
(73) Patentinhaber: Wacker Chemie AG, 81737 München (DE)
(72) Erfinder: BAUER, Andreas, 84375 Kirchdorf (DE); STANJEK, Volker, 84539 Ampfing (DE)
(74) Vertreter: Deffner-Lehner, Maria
(86) Internationale Anmeldenummer: PCT/EP2009/064808
(87) Internationale Veröffentlichungsnummer: WO 2010/057796

(56) Entgegenhaltungen:
- US-A1- 2005 119 421
- Wolfram Schindler: "Alpha-silane-terminated polymers as novel binders for fast curing elastic adhesives" Presentation at the European Coatings Show 2005 28. April 2005 (2005-04-28), Seiten 1-12, XP002576067 Gefunden im Internet: URL:http://www.wacker.com/cms/media/public ations/downloads/6190_EN.pdf> [gefunden am 2010-03-26]

## Beschreibung

Die Erfindung betrifft ein Verfahren zum Abdichten von Gebäudeoberflächen. oder Dächern unter Verwendung einer einkomponentigen, feuchtigkeitshärtenden Beschichtungszusammensetzung, die isocyanat- und bitumen-frei ist.

Es ist von enormer Wichtigkeit, anorganische und organische Baustoffe wie Beton oder Holz innen und außen an Gebäuden oder auf dem Dach gegen das Eindringen von Wasser abzudichten, um eine Zerstörung der Materialien mit der Zeit zu verhindern.

Viele häufig in der Vergangenheit verwendete Abdichtungsstoffe wie Bitumen-Bahnen sind auf komplexen Dächern mit vielen Details fast vollkommen verschunden aufgrund der sehr schwierigen Abdichtung von Ecken und Kanten. Dieses Problem wurde später durch den Einsatz von geschmolzenem Bitumen gelöst, wodurch aber andere Gefahren für den Handwerker durch giftige Dämpfe und dem Umgang der sehr heißen Flüssigkeit entstanden. Andere früher im Einsatz befindliche Lösungen wie lösungsmittelhaltige Bitumen-Systeme wurden aufgrund von VOC-Limitierungen und toxikologischen Gesichtspunkten durch andere Technologien ersetzt.

Heutzutage finden vornehmlich wasserbasierte Beschichtungsmassen wie acrylat- oder polymer-modifizierte Bitumen-Emulsionen Verwendung, aber auch ein- und zweikomponentige Polyurethan-Systeme spielen immer noch eine signifikante Rolle, z.B. in der Dachabdichtung.

Ein großer Nachteil wässriger Emulsionen ist die physikalische Trocknung der Materialien, welche insbesondere unter einer Temperatur von 15 °C sehr langsam wird. Andererseits wird die Trocknung an der Oberfläche oberhalb von 25 °C vergleichsweise schnell, so dass es zu Wassereinschlüssen und nachfolgend zur Blasenbildung kommen kann. So entstehen Schwachstellen in der Beschichtung, die zu Leckagen führen können.

Einkomponentige polyurethanbasierte Abdichtungssysteme enthalten gewöhnlich große Mengen Lösungsmittel, um die Viskosität für ein Streich- oder Roll-Applilcation im Dachbereich auf ein akzeptables Niveau zu senken. Zweikomponentige Polyurethansysteme sind im Vergleich dazu sehr teuer und erfordern eine komplizierte Applikationstechnologie. Alle Polyurethan-Abdichtungssysteme enthalten hochtoxische Isocyanatverbindungen, deren Einsatz in nahezu allen Heimwerker-, aber auch in vielen Handwerker-Anwendungen kritisch zu sehen ist.

RTV-1 Silicon-Beschichtungsformulierungen wie Acetat- oder Oxim-Systeme geben bei der Härtung schlecht riechende oder sogar gesundheitsschädliche Spaltprodukte, z.B. Essigsäure oder Oxim, ab. Weitere Nachteile dieser Materialien sind die schlechte Haftung auf einer Vielzahl von Baustoffen, die schlechte Überstreichbarkeit und die ungenügende Bewitterungsstabilität.

Einkomponentige feuchtigkeitshärtende Beschichtungsmassen auf Basis von MS-Polymeren (über ein bestimmtes Herstellverfahren hergestellte silan-terminierte Polyether) sind als Abdichtungsmaterialien zur Anwendung im Baubereich aus EP 1 695 989 A, WO 2007/093382 und WO 2008/077510 bekannt. Allen MS-Polymer-Formulierungen ist gemeinsam, dass für eine vernünftige Hautbildungszeit und eine passable Durchhärtung große Mengen an Zinn-Katalysatoren nötig sind. In der letzten Stufe des Herstellprozesses für MS-Polymer werden die Silylendgruppen über eine Hydrosilylierungsreaktion eingeführt, wie z.B. in EP 1 695 989 A beschrieben. Wie aus EP 1 036 807 A bekannt ist, ist die Effizienz dieser Endterminierung bei dem Herstellprozess für die herkömmlichen, kommerziell erhältlichen MS-Polymere mit maximal 85 % relativ schlecht. Alle nicht terminierten Endgruppen sind jedoch letztendlich unreaktiv und bilden "tote Kettenenden". Deshalb besitzen gehärtete Beschichtungsformulierungen auf Basis von MS-Polymeren immer eine substantielle Restklebrigkeit, die zu einer schnellen Verschmutzung führt und dementsprechend unerwünscht ist - insbesondere bei Anwendungen im Dachbereich. Zusätzlich müssen MS-Polymer-basierende Formulierung zum Erreichen akzeptabler mechanischer Eigenschaften mehr als 25 Gew.-% MS-Polymere als vergleichsweise teurem Formulierungsbestandteil enthalten, wie aus W02007/093382 bekannt ist.

Aus US 2005/119421 A1 sind feuchtigkeitshärtende Zusammensetzungen bekannt, wie beispielsweise eine feuchtigkeitsvernetzbare Polymerabmischung enthaltend ein silan-terminiertes Polymer, welches durch Umsetzung von einem OH-terminierten Polyurethan-Präpolymer mit Isocyanatomethyldimethylmethoxysilan hergestellt wird, Kalk als Füllstoff, Methyltrimethoxysilan als Vernetzer sowie 3-(2-Aminoethyl)aminopropyltrimethoxysilan als weiteren Vernetzer und Katalysator. Diese feuchtigkeitshärtenden Zusammensetzungen können als Dichtstoffe, insbesondere Fugendichtstoffe, und nicht näher definierte Oberflächenbeschichtungen verwendet werden.

In Wolfram Schindler:"Alpha-silane-terminated polymers as novel binders for fast-curing elastic adhesives", Presentation at the European Coatings Show 2005, 28. April 2005 (2005-04-28), Seiten 1-12, XP002576067, Gefunden im Internet: URL:http//www.wacker.com/cms/media/publications/downloads/6190_ EN.pdf [gefunden am 2010-03-26] sind α-silan-terminierte Polypropylenglycole beschrieben, die durch Umsetzung mit α-Silanen, wie Isocyanatomethylmethyldimethoxysilan, erhalten werden und als Bindemittel für Klebstoffe, insbesondere im Automobilbereich, eingesetzt werden.

Es bestand die Aufgabe ein Verfahren zur Abdichtung von Gebäudeoberflächen, insbesondere von äußeren und inneren Gebäudeoberflächen, Dächern und ähnlichem, unter Verwendung von einkomponentigen, feuchtigkeitshärtenden, isocyanat- und bitumen-freien Beschichtungszusammensetzungen, die die oben beschriebenen Nachteile nicht mehr aufweisen, bereitzustellen. Insbesondere bestand die Aufgabe ein Verfahren zur Abdichtung von Gebäudeoberflächen oder Dächern gegen das Eindringen von Wasser oder Wasserdampf bereitzustellen. Bevorzugt sollen die Beschichtungszusammensetzungen nur sehr geringe Mengen an metallhaltigen Katalysatoren, wie zinnhaltige Katalysatoren, insbesondere überhaupt keine metallhaltigen Katalysatoren, enthalten, und mit vergleichsweise geringen Mengen an vernetzungsfähigen Polymeren auskommen und zu klebfreien Beschichtungen aushärten. Die Aufgabe wird durch die Erfindung gelöst.

Gegenstand der Erfindung ist ein Verfahren zum Abdichten von Gebäudeoberflächen oder Dächern unter Verwendung von einkomponentigen, feuchtigkeitshärtenden Beschichtungszusammensetzungen (C) enthaltend 5 bis 25 Gew.-% eines oder mehrerer silan-terminierte Polymere (P) mit Endgruppen der Formel (I)

∼O-C (=O) -NH-A-Si (OR¹)ₓR²₃₋ₓ (I),

worin
- A: eine lineare oder verzweigte Alkylengruppe mit 1 bis 10 Kohlenstoffatomen bedeutet,
- R¹: eine lineare oder verzweigte, gegebenenfalls halogenierte Alkylgruppe mit 1 bis 10 Kohlenstoffatomen bedeutet,
- R²: eine lineare oder verzweigte, gegebenenfalls halogenierte Alkylgruppe mit 1 bis 10 Kohlenstoffatomen bedeutet und
- x: 1, 2 oder 3 ist,
1 bis 80 Gew.-% eines oder mehrerer Füllstoffe (F),
0,1 bis 10 Gew.-% einer oder mehrerer Wasserfänger (W),
0,01 % bis 5 Gew.-% eines oder mehrerer
Härtungskatalysatoren (K),
0,01 bis 10 Gew.-% eines oder mehrerer Haftvermittler (A) wobei in Mengen von 0,5 bis 5 Gew.-% als Härtungskatalysator (K) eingesetzte Aminosilane gleichzeitig als Haftvermittler (A) dienen können,
und gegebenenfalls in feuchtigkeitshärtenden
Beschichtungszusammensetzungen übliche weitere Stoffe, vorzugsweise Weichmacher, Rheologie-Additive, Stabilisatoren, Fungizide, Pigmente, Flammschutzmittel oder Lösungsmittel, wobei sich die Gewichtsmengen auf 100 % ergänzen,
mit der Maßgabe, dass die beschichteten Oberflächen gegen das Eindringen von Wasser oder Wasserdampf abgedichtet werden.

A ist bevorzugt eine Propylen- oder Methylengruppe. Die Methylengruppe ist wegen der hohen Reaktivität des entsprechenden Polymers (P) gegenüber Feuchtigkeit besonders bevorzugt. Formulierungen enthaltend Polymere (P), worin A eine Methylengruppe ist, haben den Vorteil, dass sie vorzugsweise ohne Metall- und insbesondere ohne Zinn enthaltende Katalysatoren gehärtet werden können.

Beispiele für Alkylreste R¹ und R² sind jeweils unabhängig voneinander der Methyl-, Ethyl-, n-Propyl-, iso-Propyl-, n-Butyl-, iso-Butyl-, tert.-Butyl-, Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest und Decylreste, wie der n-Decylrest.

Beispiele für halogenierte Alkylreste R¹ und R² sind jeweils unabhängig voneinander der 3,3,3-Trifluor-n-propylrest, der 2,2,2,2',2',2'-Hexafluorisopropylrest und der Heptafluorisopropylrest.
- R¹: ist vorzugsweise ein Methyl- oder Ethylrest.
- R²: ist vorzugsweise ein Methylrest.
- x: ist vorzugsweise 2 oder 3.

Selbstverständlich ist es auch möglich, Mischungen aus 2 oder mehreren Polymeren (P) mit Endgruppen der Formel (I) einzusetzen, worin A, R¹, R² und x unterschiedliche Bedeutung haben, z.B. Polymere (P), worin R¹ ein Methyl- and Ethylrest und/oder A eine Propylen- und Methylengruppe ist.

Beispiele für Polymere (P), die die Endgruppen der Formel (I) enthalten, sind vorzugsweise Polyester, Polyether, Polyalkylen oder Polyacrylat. Besonders bevorzugt ist ein linearer Polyether, wie ein Polypropylenoxid. Die mittleren Molekulargewichte Mₙ der Polymere (P) betragen vorzugsweise 2.000 bis 25.000 g/mol, bevorzugt 4.000 bis 20.000 g/mol und besonders bevorzugt 10.000 bis 19.000 g/mol. Die Viskosität der Polymere (P) beträgt vorzugsweise mindestens 0,2 Pa.s bei 20°C, bevorzugt mindestens 1 Pa.s bei 20°C, besonders bevorzugt mindestens 5 Pa.s bei 20°C und vorzugsweise höchstens 100 Pa.s bei 20°C, bevorzugt höchstens 40 Pa.s bei 20 °C. Die Herstellung der Polymere (P) erfolgt vorzugsweise nach Verfahren, wie sie in WO 2006/136261, EP 1 535 940 A1 oder WO 2007/131986 beschriebenen sind.

Als Basis der erfindungsgemäßen Beschichtungszusammensetzungen dienen vorzugsweise silanterminierte Polyether mit Dimethoxymethylsilyl-, Trimethoxysilyl-, Diethoxymethylsilyl-oder Triethoxysilyl-Endgruppen der Formel (I) unterschiedlicher Viskosität.

Überraschenderweise härten die erfindungsgemäßen Beschichtungsformulierungen (C) basierend auf silanterminierten Polymeren (P) zu komplett klebfreien Beschichtungen aus und unterscheiden sich damit signifikant von allen silanvernetzenden Abdichtungssystemen, wie sie im Stand der Technik beschrieben sind.

Weiterhin wurde überraschend gefunden, dass die erfindungsgemäßen Beschichtungsformulierungen (C) basierend auf silanterminierten Polymeren (P) bei vergleichsweise niedrigen Gehalten an Polymeren (P) gut durchhärten und die gehärtete Beschichtung hinreichende mechanische Eigenschaften besitzt. Die Beschichtungszusammensetzungen (C) enthalten bevorzugt höchstens 20 Gew.-% und besonders bevorzugt höchstens 15 Gew.-% Polymere (P), und vorzugsweise mindestens 5 Gew.-% Polymer (P).

Ein weiterer Vorteil der erfindungsgemäßen Beschichtungszusammensetzungen (C) liegt in der Tatsache, dass sie zum Erreichen einer hinreichenden Härtungsgeschwindigkeit keine oder nur sehr geringen Mengen an metallhaltigen, insbesondere, zinnhaltigen Katalysatoren benötigen.

Beispiele für Füllstoffe (F) sind Calciumcarbonat, Bariumsulfat, Talkum, Glimmer, Kaolin, Kieselsäure, Quarz, Schwerspat und Ruß.

Ein besonders bevorzugter Füllstoff (F) ist Calciumcarbonat. Bevorzugte Calciumcarbonat-Typen sind gemahlen oder gefällt und gegebenenfalls oberflächenbehandelt mit Fettsäuren wie Stearinsäure oder deren Salze. Die Zusammensetzung (C) enthält vorzugsweise mindestens 10 Gew.-%, bevorzugt mindestens 20 Gew.-% und vorzugsweise höchstens 75 Gew.-%, bevorzugt höchstens 70 Gew.-% und besonders bevorzugt höchstens 65 Gew.-% Calciumcarbonat.

Weiterhin bevorzugt sind Typen von Füllstoffen (F), welche eine plättchenförmige Struktur mit einem hohen Aspektverhältnis von > 2:1 aufweisen, z.B. bestimmte Talkum- und Glimmerklassen. Die Zusammensetzung (C) enthält vorzugsweise mindestens 10 Gew.-%, bevorzugt mindestens 20 Gew.-% und vorzugsweise höchstens 75 Gew.-%, bevorzugt höchstens 70 Gew.-% und besonders bevorzugt höchstens 65 Gew.-% dieser Typen von Füllstoffen (F).

Ein weiterer bevorzugter Füllstoff (F) ist Kieselsäure, insbesondere pyrogene Kieselsäure. Ganz besonders bevorzugt enthält die Zusammensetzung (C) sowohl Kieselsäure, insbesondere pyrogene Kieselsäure als auch andere Füllstoffe (F), wobei Calciumcarbonat bevorzugt ist. Die Zusammensetzung (C) enthält dann Kieselsäure, insbesondere pyrogene Kieselsäure, in Mengen von vorzugsweise mindestens 0,1 Gew.-%, bevorzugt mindestens 0,4 Gew.-%, und vorzugsweise höchstens 10 Gew.-%, bevorzugt höchstens 5 Gew.-%, und Caliciumcarbonat in den oben angegebenen Mengen, wobei die Menge an Füllstoffen (F) zusammen höchstens 80 Gew.-%, bezogen auf das Gesamtgewicht der Beschichtungszusammensetzungen (C), beträgt.

Eine weitere bevorzugte Zusammensetzung (C) ist transparent und enthält ausschließlich Kieselsäure, insbesondere pyrogene Kieselsäure, als Füllstoff (F) in Mengen vorzugsweise von 5 bis 50 Gew.-%.

Beispiele für Wasserfänger (W) sind Silane wie Vinyltrimethoxysilan, Vinyltriethoxysilan, Vinylmethyldimethoxysilan, O-Methylcarbamatomethylmethyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyltrimethoxysilan, Methacryloxymethyl-trimethoxysilan, Methacryloxymethyl-methyldimethoxysilan, Methacryloxymethyltriethoxysilan, Methacryloxymethyl-methyldiethoxysilan, 3-Acryloxypropyl-trimethoxysilan, Acryloxymethyltrimethoxysilan, Acryloxymethyl-methyldimethoxysilane, Acryloxymethyl-triethoxysilan, Acryloxymethylmethyldiethoxysilan und Orthoester, wie 1,1,1-Trimethoxyethan, 1,1,1-Triethoxyethan, Trimethoxymethan, Triethoxymethan und verwandte Verbindungen.

Die Zusammensetzung (C) enthält vorzugsweise mindestens 0,1 Gew.-%, bevorzugt mindestens 0,5 Gew.-%, und vorzugsweise höchstens 10 Gew.-%, bevorzugt höchstens 5 Gew.-% und besonders bevorzugt höchstens 4 Gew.-% eines oder mehrerer Wasserfänger (W).

Beispiele für metallhaltige Härtungskatalysatoren (K) sind Titansäureester, wie Tetrabutyltitanat, Tetrapropyltitanat, Tetraisopropyltitanat und Titantetraacetylacetonato; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (K) sind basische Verbindungen, wie Aminosilane, z.B. 3-Aminopropyltrimethoxysilan, 3-Aminopropyltriethoxysilan, 3-Aminopropyl-methyldimethoxysilan, 3-Aminopropylmethyldiethoxysilan, N-(2-Aminoethyl)-3-aminopropyltrimethoxysilan, N-(2-Aminoethyl)-3-aminopropyltriethoxysilan, N-(2-Aminoethyl)-3-aminopropyl-methyldimethoxysilan, N-(2-Aminoethyl)-3-aminopropyltriethoxysilan, Cyclohexylaminomethyltriethoxysilan, Cyclohexylaminomethyl-methyldiethoxysilan, Cyclohexylaminomethyltriethoxysilan, 3-Cyclohexylaminomethyltrimethoxysilan, Cyclohexylaminomethyitrimethoxysilan, Cyclohexylaminomethyl-methyldimethoxysilan und andere organische Amine, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethyl-phenlyamin und N-Ethylmorpholinin; saure Verbindungen, wie Phosphorsäure and ihre Ester, Toluolsulfonsäure und anorganische Säuren, wie Schwefelsäure und Salpetersäure.

Bevorzugte Härtungskatalysatoren (K) sind Aminosilane allein oder in Kombination mit Dialkylzinnverbindungen.

Die Beschichtungszusammensetzung (C) enthält vorzugsweise einen oder mehrere Härtungskatalysatoren (K), vorzugsweise metallfreie Härtungskatalysatoren, in Mengen von vorzugsweise mindestens 0,01 Gew.-%, bevorzugt mindestens 0,05 Gew.-%, und vorzugsweise höchstens 5 Gew.-%, bevorzugt höchstens 3 Gew.-%. Die Beschichtungszusammensetzung (C) kann zudem einen oder mehrere zinnhaltige Härtungskatalysatoren (K) enthalten, in Mengen von vorzugsweise mindestens 0,01 Gew.-%, bevorzugt mindestens 0,02 Gew.-%, und vorzugsweise höchstens 0,5 Gew.-%, bevorzugt höchstens 0,2 Gew.-%, besonders bevorzugt höchstens 0,1 Gew.-%, wobei die Menge an Härtungskatalysatoren zusammen höchstens 5 Gew.-%, bezogen auf das Gesamtgewicht der Beschichtungszusammensetzungen (C), beträgt.

Besonders bevorzugt sind die erfindungsgemäßen Beschichtungszusammensetzungen (C) jedoch vollständig zinnfrei.

Eine zinnfreie Zusammensetzung der Beschichtungen (C) gelingt vorzugsweise durch Einsatz von Polymeren (P) mit Endgruppen der Formel (I), bei denen A eine Methylengruppe ist. Die Verwendung zinnfreier Beschichtungszusammensetzungen (C) auf Basis dieser Polymere stellt somit eine besonders bevorzugte Ausführung der Erfindung dar.

Die Härtungskatalysatoren (K) können sowohl in reiner Form als auch in Mischungen eingesetzt werden.

Beispiele für Haftvermittler (A) sind Aminosilane, wie 3-Aminopropyltrimethoxysilan, 3-Aminopropyltriethoxysilan, 3-Aminopropyl-methyldimethoxysilan, 3-Aminopropyl-methyldiethoxy-silan, N-(2-Aminoethyl) -3-aminopropyltrimethoxysilan, N-(2-Aminoethyl)-3-aminopropyltriethoxysilan, N-(2-Aminoethyl)-3-aminopropyl-methyldimethoxysilan, N-(2-Aminoethyl)-3-amino-propyltriethoxysilan, Cyclohexylaminomethyltriethoxysilan, Cyclohexylaminomethyl-methyldiethoxysilan, Cyclohexylaminomethyltriethoxysilan, 3-Cyclohexylaminomethyl-trimethoxysilan, Cyclohexylaminomethyltrimethoxysilan und Cyclohexylaminomethyl-methyldimethoxysilan, Epoxysilane wie Glycidoxypropyltrimethoxysilane, Glycidoxypropyl-methyldimethoxysilan, Glycidoxypropyltriethoxysilan oder Glycidoxypropyl-metyhldiethoxysilan. Auch andere Silane mit organofunktionellen Gruppen wie beispielsweise 2-(3-Triethoxysilylproypl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilymethyl)-harnstoff, N-(3-Triethoxysilylmethyl)-harnstoff, N-(3-Methyldiethoxysilylmethyl)harnstoff, O-Methylcarbamatomethylmethyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyltrimethoxysilan, Methacryloxymethyl-trimethoxysilan, Methacryloxymethyl-methyldimethoxysilan, Methacryloxymethyltriethoxysilan, Methacryloxymethyl-methyldiethoxysilan, 3-Acryloxypropyl-trimethoxysilan, Acryloxymethyltrimethoxysilan, Acryloxymethyl-methyldimethoxysilane, Acryloxymethyl-triethoxysilan, Acryloxymethylmethyldiethoxysilan können als Haftvermittler eingesetzt werden.

Die Beschichtungszusammensetzung (C) enthält einen oder mehrere Haftvermittler (A) in Mengen von vorzugsweise mindestens 0,01 Gew.-%, bevorzugt mindestens 0,5 Gew.-, und vorzugsweise höchstens 10 Gew.-%, bevorzugt höchstens 5 Gew.-%.

Werden als Härtungskatalysatoren (K) Aminosilane eingesetzt, so dienen sie vorzugsweise auch gleichzeitig als Haftvermittler (H). Die Menge an Aminosilanen in den erfindungsgemäßen Beschichtungszusammensetzungen beträgt bevorzugt mindestens 0,5 Gew.-%, und vorzugsweise höchstens 5 Gew.-%, bevorzugt höchstens 3 Gew.-%.

Die Beschichtungszusammensetzungen können für feuchtigkeitshärtende Beschichtungszusammensetzungen übliche weitere Stoffe enthalten.

Die erfindungsgemäße Beschichtungszusammensetzung (C) kann einen oder mehrere Weichmacher wie Phthalsäureester (z.B. Dioctylphthalat, Diisooctylphthalat, Diundecylphthalat), Aidipinsäureester (z.B. Dioctyladipat), Benzoesäureester, Glycolester, Ester gesättigter Alkandiole (z.B. 2,2,4-Trimethyl-1,3-pentandiolmonoisobutyrate, 2,2,4-Trimethyl-1,3-pentandioldiisobutyrate), Phosphorsäureester, Sulfonsäureester, Polyester, Polyether, Polystyrole, Polybutadiene, Polyisobutylene, paraffinische Kohlenwasserstoffe und hochmolekulare, verzweigte Kohlenwasserstoffe enthalten. Die Gesamtmenge an allen in der Zusammensetzung (C) enthaltenen Weichmachern beträgt vorzugsweise mindestens 5 Gew.-%, bevorzugt mindestens 10 Gew.-%, und vorzugsweise höchstens 60 Gew.-%, bevorzugt höchstens 55 Gew.-% und besonders bevorzugt höchstens 40 Gew.-%.

Die erfindungsgemäße Beschichtungsformulierung (C) kann ein oder mehrere Rheologie-Additive, wie z.B. hydrophile pyrogene Kieselsäure, beschichtete hydrophobe pyrogene Kieselsäure, gefällte Kieselsäure, Polyamidwachse, hydrierte Rizinusöle, Stearate and gefällte Calciumcarbonate enthalten, wobei diese in Mengen von vorzugsweise mindestens 0,1 Gew.-%, bevorzugt mindestens 0,5 Gew.-%, und vorzugsweise höchstens 10 Gew.-%, bevorzugt höchstens 5 Gew.-%, eingesetzt werden.

Die erfindungsgemäße Beschichtungsformulierung (C) kann weiterhin Stabilisatoren, wie Lichtstabilisatoren (z.B. HALS-Verbindungen), Fungizide, Flammschutzmittel, Pigmente, Lösungsmittel oder andere für einkomponentige, silanvernetzende Systeme typische Additive enthalten.

Folgende Beschichtungszusammensetzung (C) ist bevorzugt:

| | |
|---|---|
| 5 bis 25 Gew.-%,bevorzugt 5 bis 20 Gew.-%, | silan-terminierte Polymere (P) |
| 10 to 70 Gew.-% | Calciumcarbonat, Glimmer oder Talkum |
| 0,5 to 4 Gew.-% | Wasserfänger (W) |
| 0,05 to 3 Gew.-% | Härtungskatalysatoren (K), insbesondere zinnfreie Härtungskatalysatoren |
| 0,1 to 5 Gew.-% | Haftvermittler (A) |
| 0 to 55 Gew.-% | Weichmacher |
| 0 to 5 Gew.-% | Rheologie-Additive |
| 0 to 5 Gew.-% | Stabilisatoren und Pigmente |
| 0 to 30 Gew.-% | Flammschutzmittel |
| 0 to 20 Gew.-% | Lösungsmittel, |

wobei sich die Gesamtmengen auf 100 Gew.-% ergänzen.

Die Herstellung der Beschichtungszusammensetzungen kann nach Methoden und Mischverfahren erfolgen, wie sie zur Herstellung von feuchtigkeitshärtenden Beschichtungszusammensetzungen üblich sind.

Das erfindungsgemäße Verfahren eignet sich zum Abdichten von Gebäudeoberflächen oder Dächern gegen das Eindringen von Wasser. Es eignet sich zum Abdichten von Oberflächen von äußeren Gebäudeoberflächen, inneren Gebäudeflächen (z.B. in Feuchträumen, wobei die beschichteten Oberflächen danach auch noch mit Fliesen oder sonstigen dekorativen Materialien belegt werden können), Dächern und ähnlichem. Das erfindungsgemäße Verfahren eignet sich auch dazu, die entsprechenden Oberflächen mit einer Barriere gegen die Diffusion von Wasserdampf auszustatten.

Bei dem erfindungsgemäßen Verfahren wird die Beschichtungszusammensetzung (C) vorzugsweise mittels Pinsel, Roller, Rakel oder kommerziellen Sprühgeräten wie Airless-Geräten appliziert.

Die erfindungsgemäßen Beschichtungszusammensetzungen werden vorzugsweise in einer Schichtdicke von 0,1 bis 5 mm aufgetragen.

Beispiele für Oberflächen auf die die erfindungsgemäßen Beschichtungszusammensetzungen aufgetragen werden können, sind mineralische Baustoffe, Metalle, Dachpappen, Kunststoffe, Fasergewebe, Glas oder Keramik. Die erfindungsgemäßen Beschichtungszusammensetzungen zeigen thixotropes Verhalten und können sowohl auf horizontale als auch vertikale Flächen appliziert werden.

Die erfindungsgemäßen Beschichtungszusammensetzungen werden vorzugsweise auf die zu beschichtenden Gebäudeoberflächen und Dächern aufgetragen und härten gelassen. Die Härtung erfolgt vorzugsweise bei Temperaturen von 0 bis 50 °C, bevorzugt 10 bis 40 °C und beim Druck der umgebenden Atmosphäre (ca. 1020 hPa). Die Härtung kann aber auch bei höheren oder niedrigeren Drücken erfolgen.

Die nach der Härtung erhaltenen Beschichtungen zeichnen sich durch eine hervorragende Elastizität, hohe Bewitterungsstabilität und gute Überstreichbarkeit aus.

Alle vorstehenden Symbole der vorstehenden Formeln weisen ihre Bedeutungen jeweils unabhängig voneinander auf. In allen Formeln ist das Siliciumatom vierwertig.

Die folgenden Beispiele dienen der Erläuterung der Erfindung ohne diese zu beschränken. Soweit nicht anders angegeben, sind alle Mengen- und Prozentangaben auf das Gewicht bezogen, alle Drücke 0,10 MPa (abs.) und alle Temperaturen 20°C. Der Ausdruck "Gew."%" bezieht sich ausnahmslos immer auf die gesamte Beschichtungszusammensetzung (C).

### Beispiel 1:

100 g (10 Gew.-%) GENIOSIL^{®} STP-E10 (ein Polypropylenglycol mit Endgruppen der Formel (I) mit A = methylenrest, R¹ = Methylrest, R² = Methylrest und x = 2; käuflich erwerblich bei der Wacker Chemie AG), 500 g (50 Gew. -%) Diisodecylphtalat und 20 g (2 Gew.%) Vinyltrimethoxysilan (GENIOSIL^{®} XL 10, Wacker Chemie AG) werden in einem Planetenmischer (LabMax, PC-Laborsystem) vorgelegt und bei Raumtemperatur für 2 Minuten bei 400 Umin⁻¹ unter Atmosphärendruck gemischt. Anschließend werden 330 g (33 Gew.-%) gemahlenes Calciumcarbonat (BLR3, OMYA) zugegeben und für 3 Minuten bei 600 Umin⁻¹ unter Atmosphärendruck eingearbeitet. Danach werden 20 g (2 Ges.-%) hydrophobe pyrogene Kieselsäure (HDK^{®} H18, Wacker Chemie AG) in den Mischer gegeben, für 2 Minuten bei 200 Umin⁻¹ unter Atmosphären-druck und anschließend für 2 Minuten bei 600 Umin⁻¹ und 100 mbar gemischt. Abschließend werden 30 g (3 Gew.-%) 3-Aminopropyl-trimethoxysilan (GENIOSIL^{®} GF 96, Wacker Chemie AG) zur Mischung gegeben und für 3 Minuten bei 600 Umin⁻¹ und 100 mbar gemischt. Die Formulierung wird in 310 ml Kartuschen abgefüllt und für 24 h gelagert.

### Beispiel 2:

190 g (19 Gew.-%) GENIOSIL^{®} STP-E30 (ein Polypropylenglycol mit Endgruppen der Formel (I) mit A = Methylenrest, R¹= Methylrest, R² = Methyl und x = 2; käuflich erwerblich bei der Wacker Chemie AG), 180 g (18 Gew. -%) 2,2,4-Trimethyl-1,3-pentandioldiisobutyrate (TXIB, Eastman), 15 g (1,5 Gew.-%) Vinyltrimethoxysilan (GENIOSIL^{®} XL 10, Wacker Chemie AG), 5 g (0,5 Gew.-%) O-Methylcarbamatomethyl-methyldimethoxysilan (GENIOSIL^{®} XL 65, Wacker Chemie AG) werden in einem Planetenmischer (LabMax, PC-Laborsystem) vorgelegt und bei Raumtemperatur für 2 Minuten bei 400 Umin⁻¹ unter Atmosphärendruck gemischt. Anschließend werden 600 g (60 Gew.-%) gemahlenes Calciumcarbonat (ImerSeal 50, Imerys) zugegeben und für 3 Minuten bei 600 Umin⁻¹ unter Atmosphärendruck eingearbeitet. Danach werden 5 g (0,5 Gew.-%) hydrophile pyrogene Kieselsäure (HDK^{®} N20, Wacker Chemie AG) in den Mischer gegeben, für 2 Minuten bei 200 Umin⁻¹ unter Atmosphärendruck und anschließend für 2 Minuten bei 600 Umin⁻¹ und 100 mbar gemischt. Abschließend werden 5 g (0,5 Gew.-%) 3-Aminopropyltrimethoxysilan (GENIOSIL^{®} GF 96, Wacker Chemie AG) zur Mischung gegeben und für 3 Minuten bei 600 Umin⁻¹ und 100 mbar gemischt. Die Formulierung wird in 310 ml Kartuschen abgefüllt und für 24 h gelagert.

### Beispiel 3:

150 g (15 Gew.-%) GENIOSTL^{®} STP-E35 (ein Polypropylenglycol mit Endgruppen der Formel (I) mit A = Proloylenrest, R¹= Methyl-rest, R² = Methylrest und x = 3; käuflich erwerblich bei der Wacker Chemie AG), (GENIOSIL^{®} STP-E35, Wacker Chemie AG), 230 g (23 Gew. -%) Diisodecylphtalat und 20 g (2 Gew. -%) Vinyltrimethoxysilan (GENTOSIL^{®} XL 10, Wacker Chemie AG) werden in einem Planetenmischer (LabMax, PC-Laborsystem) vorgelegt und bei Raumtemperatur für 2 Minuten bei 400 Umin⁻¹ unter Atmosphärendruck gemischt. Anschließend werden 559,5 g (55,95 Gew.-%) gemahlenes Calciumcarbonat (ImerSeal 50, Imerys) zugegeben und für 3 Minuten bei 600 Umin⁻¹ unter Atmosphärendruck eingearbeitet. Danach werden 10 g (1 Gew.-%) hydrophobe pyrogene Kieselsäure (HDK^{®} H18, Wacker Chemie AG) in den Mischer gegeben, für 2 Minuten bei 200 Umin⁻¹ unter Atmosphärendruck und anschließend für 2 Minuten bei 600 Umin⁻¹ und 100 mbar gemischt. Abschließend werden 30 g (30 Gew.-%) 3-Aminopropyltrimethoxysilan (GENIOSIL^{®} GF 96, Wacker Chemie AG) und 0,5 g (0, 05 Gew.-%) Dibutylzinndilaurat zur Mischung gegeben und für 3 Minuten bei 600 Umin⁻¹ und 100 mbar gemischt. Die Formulierung wird in 310 ml Kartuschen abgefüllt und für 24 h gelagert.

### Beispiel 4:

Wasseraufnahmeprüfung von mit den erfindungsgemäßen Zusammensetzungen beschichteten Ziegelsteinen:
Für diese Prüfung werden Vollformatziegelsteine (23,5 x 11,5 x 7 cm) der Fa. Schlagmann mit Preßluft entstaubt und mit 2 mm dicken und 1,5 cm breiten Glasstreifen jeweils eine Schablone aufgelegt. In diese Schablonen werden jeweils die Beschichtungszusammensetzungen gemäß den Beispielen 1 bis 3 eingebracht und mittels Abziehklinge oder Spachtel gleichmäßig verteilt und abgezogen. Die fertigen Prüfkörper werden anschließend 14 Tage bei 25°C und 50% rel. Luftfeuchte gelagert.

Nach dieser Lagerung wird die Schablone entfernt und die Beschichtung (20,5 x 8,0 x 0,2 cm) auf eventuelle Schäden überprüft. Der restliche freie Bereich des Ziegelsteins wird nun mit einer speziellen Dichtmasse (ELASTOSIL^{®} E10, Wacker Chemie AG) beschichtet, um das Eindringen des Wassers in den ungecoateten Bereich zu verhindern. Es wird auch über die Kante des Ziegelsteins hinweg diese Spezialdichtmasse aufgetragen (ca. 1 cm hoch) und nach Herstellerangaben trocknen gelassen.

Der Ziegelstein wird nun gewogen, um den Ausgangswert zu ermitteln. Nun wird der Prüfkörper mit der gecoateten Fläche nach unten auf Glasstäbe in eine Wanne gelegt und diese mit VE-Wasser gefüllt, bis der Ziegelstein ca. 0,5 cm hoch mit Wasser umgeben ist. In bestimmten Abständen wird der Probekörper aus der Wanne genommen, das anhaftende Wasser auf der Beschichtung mit einem Papiertuch entfernt und anschließend gewogen.

Der unbeschichtete Ziegelstein (Blindwert) hatte binnen 1 h seine maximal Wasseraufnahme von 13,5 % erreicht. Die mit den erfindungsgemäßen Formulierungen aus Beispiel 1 bis 3 beschichteten Ziegelsteine zeigten selbst nach einer Wasserlagerung von 4 Wochen keine Gewichtszunahme und damit eine Wasseraufnahme von 0 %.

### Vergleichsversuch 1 :

150 g (15 Gew.-%) MS-Polymer (S303H, käuflich erwerblich bei der Kaneka Corporation), 230 g (23 Gew.-%) Diisodecylphtalat und 20 g (2 Gew.-%) Vinyltrimethoxysilan (GENIOSIL^{®} XL 10, Wacker Chemie AG) werden in einem Planetenmischer (LabMax, PC-Laborsystem) vorgelegt und bei Raumtemperatur für 2 Minuten bei 400 Umin⁻¹ unter Atmosphärendruck gemischt. Anschließend werden 552,5 g (55,25 Gew.-%) gemahlenes Calciumcarbonat (ImerSeal 50, Imerys) zugegeben und für 3 Minuten bei 600 Umin⁻¹ unter Atmosphärendruck eingearbeitet. Danach werden 10 g (1 Gew.-%) hydrophobe pyrogene Kieselsäure (HDK^{®} H18, Wacker Chemie AG) in den Mischer gegeben, für 2 Minuten bei 200 Umin⁻¹ unter Atmosphärendruck und anschließend für 2 Minuten bei 600 Umin⁻¹ und 100 mbar gemischt. Abschließend werden 30 g (3 Gew.-%) 3-Aminopropyltrimethoxysilan (GENIOSIL^{®} GF 96, Wacker Chemie AG) und 7,5 g (0,75 Gew.-%) Dibutylzinndilaurat zur Mischung gegeben und für 3 Minuten bei 600 Umin⁻¹ und 100 mbar gemischt. Die Formulierung wird in 310 ml Kartuschen abgefüllt und für 24 h gelagert.

### Vergleichsversuch 2:

250 g (25 Gew.-%) MS-Polymer (S303H, Kaneka Corporation), 200 g (20 Gew.-%) Diisodecylphtalat und 20 g (2 Gew.-%) Vinyltrimethoxysilan (GENIOSIL^{®} XL 10, Wacker Chemie AG) werden in einem Planetenmischer (LabMax, PC-Laborsystem) vorgelegt und bei Raumtemperatur für 2 Minuten bei 400 Umin⁻¹ unter Atmosphärendruck gemischt. Anschließend werden 489,5 g (48,95 Gew.-%) gemahlenes Calciumcarbonat (ImerSeal 50, Imerys) zugegeben und für 3 Minuten bei 600 Umin⁻¹ unter Atmosphärendruck eingearbeitet. Danach werden 10 g (1 Gew.-%) hydrophobe pyrogene Kieselsäure (HDK^{®} H18, Wacker Chemie AG) in den Mischer gegeben, für 2 Minuten bei 200 Umin⁻¹ unter Atmosphärendruck und anschließend für 2 Minuten bei 600 Umin⁻¹ und 100 mbar gemischt. Abschließend werden_30g (3 Gew.-%) 3-Aminopropyltrimethoxysilan (GENIOSIL^{®} GF 96, Wacker Chemie AG) und 0,5 g (0,05 Gew.-%) Dibutylzinndilaurat zur Mischung gegeben und für 3 Minuten bei 600 Umin⁻¹ und 100 mbar gemischt. Die Formulierung wird in 310 ml Kartuschen abgefüllt und für 24 h gelagert.

### Vergleichsversuch 3:

Eine kommerzielle Abdichtungsformulierung auf MS-Polymer-Basis (Bostik Aqua Blocker gekauft im Baumarkt Hornbach) wurde analysiert. Der Polymergehalt laut Thermogravimetrie und Kernresonanzspektroskopie betrug ca. 25 Gew.-%. Der Zinngehalt wurde mittels Elementaranalyse zu 0,14 Gew.-% bestimmt, was einem rechnerischen Dibutylzinndilaurat-Gehalt von ca. 0,75 Gew.-% entspricht.

Von den erfindungsgemäßen Beschichtungszusammensetzungen der Beispiele 1 bis 3 und den nicht erfindungsgemäßen Beschichtungszusammensetzungen der Vergleichsversuche 1 bis 3 wurden die Hautbildungszeit, die mechanischen Eigenschaften, die Klebrigkeit und der Wasserdampfdiffusionswiderstand bestimmt. Die Ergebnisse sind in der Tabelle zusammengefasst.

**Tabelle :**

| Beispiel bzw. Vergleichsversuch | Bsp.1 | Bsp.2 | Bsp.3 | Vergl.1 | Vergl.2 | vergl.3 |
|---|---|---|---|---|---|---|
| Polymergehalt [Gew.-%] | 10 | 19 | 15 | 15 | 25 | 25 |
| Viskosität [Pa*s] | 27 | 85 | 77 | 73 | 73 | 83 |
| Zinnkatalysator [Gew.-%] | 0 | 0 | 0,05 | 0,75 | 0,05 | 0,75 |
| Hautbildungszeit [min] | 55 | 27 | 75 | härtet nicht | Wochen | 32 |
| Zugfestigkeit [N/mm2] | 0,4 | 0,9 | 0,7 | - | nicht bestimmt | 0,8 |
| Reißdehnung [%] | 330 | 430 | 470 | - | nicht bestimmt | 350 |
| Shore A | 10 | 35 | 31 | - | nicht bestimmt | 21 |
| Klebrigkeit | klebfrei | klebfrei | klebfrei | - | sehr klebrig | klebrig |
| Wasserdampfdiffusionswiderstand µ | 550 | 510 | 490 | - | nicht bestimmt | 530 |

### Meßmethoden:

Die Viskosität der Zusammensetzungen wurde mit einem Brookfield Viskosimeter (Spindel 6, 5 Hz) bestimmt. Zur Bestimmung der mechanischen Eigenschaften wurden die Materialien aus den Beispielen in 2 mm tiefe Teflon-Formen gefüllt und für 2 Wochen bei 23 °C und 50 % rel. Luftfeuchte gehärtet. Die mechanischen Eigenschaften der erhaltenen Folien wurde in Anlehnung an DIN 53504 (Zugfestigkeit, Reißdehnung) and DIN 53505 (Shore-Härte) bestimmt. Die Klebrigkeit wurde qualitativ durch Berühren der Folie beurteilt. Der wasserdampfdiffusionswiderstand µ wurde mittels der Wet-cup-Methode (Ammoniumdihydrogenphosphate, Gradient 93 % / 50 % rel. Luftfeuchtigkeit bei 23 °C) bestimmt.

Wie aus der Tabelle zu entnehmen härten die erfindungsgemäßen Beschichtungszusammensetzungen auch bei niedrigem Polymergehalt von unter 20 Gew.-% klebfrei aus und das ohne Mitverwendung von Zinnkatalysatoren. Sie weisen gute mechanische Eigenschaften auf (siehe Bsp. 1-3).

Die mit MS-Polymeren gemäß dem Stand der Technik in den Vergleichsversuchen erhaltenen Beschichtungszusammensetzungen härten trotz hohem Gehalt an Zinnkatalystor bei niedrigen Polymergehalten unter 20 Gew.-% nicht (siehe Vergl. 1).

Bei Erhöhung des Polymergehalts auf 25 Gew.-% und niedrigem Zinngehalt härten die Zusammensetzungen mit MS-Polymer nur sehr langsam nach Wochen und die Oberfläche ist sehr klebrig (siehe Vergl. 2), d.h. untauglich für die Praxis.

Erst bei starker Erhöhung_des Gehalts_an Zinnkatalysatoren wird eine Härtung erzielt, wobei die Oberfläche noch klebrig ist (siehe Vergl. 3).

## Patentansprüche

1. Verfahren zum Abdichten von Gebäudeoberflächen oder Dächern unter Verwendung von einkomponentigen, feuchtigkeitshärtenden Beschichtungzusammensetzungen (C) enthaltend
5 bis 25 Gew.-% eines oder mehrerer.silan-terminierte Polymere (P) mit Endgruppen der Formel (I)
∼O-C(=O)-NH-A-Si(OR¹)ₓR²₃₋ₓ (I),
worin
A eine lineare oder verzweigte Alkylengruppe mit 1 bis 10 Kohlenstoffatomen bedeutet,
R¹eine lineare oder verzweigte, gegebenenfalls halogenierte Alkylgruppe mit 1 bis 10 Kohlenstoffatomen bedeutet,
R²eine lineare oder verzweigte, gegebenenfalls halogenierte Alkylgruppe mit 1 bis 10 Kohlenstoffatomen bedeutet und
x 1, 2 oder 3 ist,
1 bis 80 Gew.-% eines oder mehrerer Füllstoffe (F),
0,1 bis 10 Gew.-% einer oder mehrerer Wasserfänger (W),
0,01 % bis 5 Gew.-% eines oder mehrerer
Härtungskatalysatoren (K),
0,01 bis 10 Gew.-% eines oder mehrerer Haftvermittler (A) wobei in Mengen von 0,5 bis 5 Gew.-% als Härtungskatalysator (K) eingesetzte Aminosilane gleichzeitig als Haftvermittler (A) dienen können, and gegebenenfalls in feuchtigkeitshärtenden Beschichtungszusammensetzungen übliche weitere Stoffe, wobei sich die Gewichtsmengen auf 100 % ergänzen, mit der Maßgabe, dass die beschichteten Oberflächen gegen das Eindringen von Wasser oder Wasserdampf abgedichtet werden.

2. Verfahren nach Anspruch 1, **dadurch gekennzeichnet, dass** A in Formel (I) ein Methylenrest ist.

3. Verfahren nach Anspruch 1 oder 2, **dadurch gekennzeichnet, dass** die Beschichtungszusammensetzungen als Härtungskatalysatoren (K) ausschließlich zinnfreie Härtungskatalysatoren enthalten.

4. Verfahren nach Anspruch 1 oder 2, **dadurch gekennzeichnet, dass** die Beschichtungszusammensetzungen als Härtungskatalysatoren (K) ausschließlich metallfreie Härtungskatalysatoren enthalten.

5. Verfahren nach einem der Ansprüche 1 bis 4, **dadurch gekennzeichnet, dass** als metallfreie Härtungskatalysatoren (K) Aminosilane eingesetzt werden.

6. Verfahren nach einem der Ansprüche 1 bis 5, **dadurch gekennzeichnet, dass** als Füllstoffe (F) Calciumcarbonat, Glimmer oder Talkum oder deren Mischungen eingesetzt werden.

7. Verfahren nach einem der Ansprüche 1 bis 6, **dadurch gekennzeichnet, dass** als weitere Stoffe in den Beschichtungszusammensetzungen Weichmacher, Rheologie-Additive, Stabilisatoren, Pigmente, Flammschutzmittel oder Lösungsmittel eingesetzt werden.

8. Verfahren zum Abdichten von Gebäudeoberflächen oder Dächern, **dadurch gekennzeichnet, dass** die Beschichtungszusammensetzungen gemäß einem der Ansprüche 1 bis 7 auf die zu beschichtenden Gebäudeoberflächen oder Dächern aufgetragen und härten gelassen werden, wodurch die beschichteten Oberflächen gegen das Eindringen von Wasser oder Wasserdampf abgedichtet werden.

## Claims

1. Method for sealing building surfaces or roofs using one-component, moisture-curing coating compositions (C) comprising
5% to 25% by weight of one or more silane-terminated polymers (P) having end groups of the formula (I)
∼O-C(=O)-NH-A-Si(OR¹)ₓR²₃₋ₓ (I),
in which
A is a linear or branched alkylene group having 1 to 10 carbon atoms,
R¹ is a linear or branched, optionally halogenated alkyl group having 1 to 10 carbon atoms,
R² is a linear or branched, optionally halogenated alkyl group having 1 to 10 carbon atoms, and
x is 1, 2 or 3,
1% to 80% by weight of one or more fillers (F),
0.1% to 10% by weight of one or more water scavengers (W),
0.01% to 5% by weight of one or more curing catalysts (K),
0.01% to 10% by weight of one or more adhesion promoters (A),
wherein aminosilanes used as curing catalyst (K) in amounts of from 0.5% to 5% by weight can serve as adhesion promoter (A) at the same time,
and optionally further substances customary in moisture-curing coating compositions, the amounts by weight adding up to 100%,
with the proviso that the coated surfaces are sealed against the penetration of water or water vapour.

2. Method according to Claim 1, **characterized in that** A in formula (I) is a methylene radical.

3. Method according to Claim 1 or 2, **characterized in that** the coating compositions comprise exclusively tin-free curing catalysts as curing catalysts (K).

4. Method according to Claim 1 or 2, **characterized in that** the coating compositions comprise exclusively metal-free curing catalysts as curing catalysts (K).

5. Method according to any of Claims 1 to 4, **characterized in that** aminosilanes are used as metal-free curing catalysts (K).

6. Method according to any of Claims 1 to 5, **characterized in that** calcium carbonate, mica or talc or mixtures thereof are used as fillers (F).

7. Method according to any of Claims 1 to 6, **characterized in that** further substances used in the coating compositions comprise plasticizers, rheological additives, stabilizers, pigments, flame retardants or solvents.

8. Method for sealing building surfaces or roofs, **characterized in that** the coating compositions according to any of Claims 1 to 7 are applied to the building surfaces or roofs to be coated, and are caused to cure, as a result of which the coated surfaces are sealed against the penetration of water or water vapour.

## Revendications

1. Procédé pour l'étanchéification de toitures ou de surfaces de bâtiments avec utilisation de compositions de revêtement monocomposants (C) durcissant à l'humidité, contenant
5 à 25 %. en poids d'un ou de plusieurs polymères à terminaison silane (P) comportant des groupes terminaux de formule (I)
-O-C(=O)-NH-A-Si(OR¹)ₓR²₃₋ₓ (I),
dans laquelle
A représente un groupe alkylène linéaire ou ramifié ayant de 1 à 10 atomes de carbone,
R¹ représente un groupe alkyle linéaire ou ramifié, éventuellement halogéné, ayant de 1 à 10 atomes de carbone,
R² représente un groupe alkyle linéaire ou ramifié, éventuellement halogéné, ayant de 1 à 10 atomes de carbone et
x est 1, 2 ou 3,
1 à 80 % en poids d'une ou de plusieurs charges (F),
0,1 à 10 % en poids d'un ou de plusieurs capteurs d'eau (W),
0,01 % à 5 % en poids d'un ou de plusieurs catalyseurs de durcissement (K),
0,01 à 10 % en poids d'un ou de plusieurs promoteurs d'adhérence (A),
des aminosilanes utilisés comme catalyseur de durcissement (K) en quantités de 0,5 à 5 % en poids pouvant servir en même temps de promoteur d'adhérence (A),
et éventuellement d'autres substances usuelles dans des compositions de revêtement durcissant à l'humidité, les quantités pondérales se complétant à 100 %,
étant entendu que les surfaces revêtues sont étanchéifiées contre la pénétration d'eau ou de vapeur d'eau.

2. Procédé selon la revendication 1, **caractérisé en ce que** A dans la formule (I) est un radical méthylène.

3. Procédé selon la revendication 1 ou 2, **caractérisé en ce que** les compositions de revêtement contiennent en tant que catalyseurs de durcissement (K) exclusivement des catalyseurs de durcissement sans étain.

4. Procédé selon la revendication 1 ou 2, **caractérisé en ce que** les compositions de revêtement contiennent en tant que catalyseurs de durcissement (K) exclusivement des catalyseurs de durcissement sans métaux.

5. Procédé selon l'une quelconque des revendications 1 à 4, **caractérisé en ce qu'**on utilise comme catalyseurs de durcissement (K) sans métaux des aminosilanes.

6. Procédé selon l'une quelconque des revendications 1 à 5, **caractérisé en ce qu'**on utilise comme charges (F) le carbonate de calcium, le mica ou le talc ou des mélanges de ceux-ci.

7. Procédé selon l'une quelconque des revendications 1 à 6, **caractérisé en ce que** dans les compositions de revêtement on utilise comme autres charges des plastifiants, des additifs de rhéologie, des stabilisants, des pigments, des agents ignifuges ou des solvants.

8. Procédé pour l'étanchéification de toitures ou de surfaces de bâtiments, **caractérisé en ce qu'**on applique et laisse durcir sur les toitures ou surfaces de bâtiments à revêtir les compositions de revêtement selon l'une quelconque des revendications 1 à 7, de sorte que les surfaces revêtues sont étanchéifiées contre la pénétration d'eau ou de vapeur d'eau.
